# EUROPÄISCHE PATENTSCHRIFT

(11) **EP 2 841 363 B1**
(45) Veröffentlichungstag und Bekanntmachung des Hinweises auf die Patenterteilung: **02.11.2016**
(21) Anmeldenummer: 13722666.8
(22) Anmeldetag: 17.04.2013
(51) Int. Cl.: B65G 49/06, B62B 5/00, B62B 5/04, B62B 3/10

(54) **VERFAHREN UND VORRICHTUNG FÜR DAS BÜNDIGE UMSETZEN GROSSFLÄCHIGER PLATTEN UNTERSCHIEDLICHER BAUART AUF EIN TRANSPORTFAHRZEUG**
METHOD AND APPARATUS FOR THE FLUSH TRANSFER OF LARGE-SURFACE-AREA PANELS OF DIFFERENT TYPES OF CONSTRUCTION TO A TRANSPORTING VEHICLE
PROCÉDÉ ET DISPOSITIF POUR LE TRANSFERT À PLAT DE PLAQUES DE GRANDE SURFACE DE DIFFÉRENTS TYPES DE CONSTRUCTION SUR UN VÉHICULE DE TRANSPORT

(30) Priorität: 24.04.2012 DE 102012008239
(43) Veröffentlichungstag der Anmeldung: 04.03.2015
(73) Patentinhaber: Grenzebach Maschinenbau GmbH, 86663 Asbach-Baeumenheim (DE)
(72) Erfinder: WENNINGER, Egbert, 86641 Rain (DE); JENNING, Roland, 86660 Tapfheim (DE); KROMMER, Franz, 86690 Mertingen (DE)
(74) Vertreter: Kindermann, Peter
(86) Internationale Anmeldenummer: PCT/DE2013/000200
(87) Internationale Veröffentlichungsnummer: WO 2013/159759

(56) Entgegenhaltungen:
- DE-B4-102008 045 370

## Beschreibung

Die Erfindung betrifft das bündige Umsetzen großflächiger Platten unterschiedlicher Bauart, wie zum Beispiel Glasplatten, Holzfaserstoffplatten oder Gipskartonplatten, auf ein Transportfahrzeug.

Solche großflächigen Platten werden vor allem beim Bau von konventionellen Ein-und Mehrfamilienhäusern in der Form von Platten für den Innenausbau, beim Bau von Fertighäusern in der Form verschiedenster vorgefertigter Bauplatten oder zur Gestaltung von Fassaden in der Form verschiedenartigster Glasplatten benötigt.

So ist beispielsweise aus der DE 601 23 604 T2 ein Fertighaus bekannt, das aus speziell ausgestalteten Wandplatten, einer Mehrzahl von Sicherungsgliedern und besonders ausgebildeten Dachplatten besteht.

Die Herstellung großflächiger Glasplatten dagegen erfolgt in der Form von Floatglas durch das fortlaufende Ausgießen einer Glasschmelze auf einem in einer länglichen Wanne erhitzten Zinnbad und das sich hieraus ergebende Glasband. Das anschließende Konfektionieren des Floatglases geschieht durch Längsschneiden und Querschneiden des aus der Floatglasfertigung mit einer bestimmten Vorschubgeschwindigkeit auslaufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern.
Auf diese Weise können Glasplatten von beträchtlicher Größe hergestellt werden. Als so genanntes Bandmaß oder Großformat wird hierbei eine Größe von 6 Meter mal 3,21 Meter bezeichnet. Als so genanntes geteiltes Bandmaß oder Mittelformat wird eine Plattengröße von 3,21 Meter mal 2 Meter (bis 2,5 Meter) bezeichnet.

Um Glasplatten von solcher Größe bruchfrei von einem Ort zu einem anderen zu transportieren, werden hierzu Haltemechanismen, meist in der Form eines in sich stabilen Rahmens, an die betreffende Glasplatte heranbewegt, mit diesem über Saugnäpfe verbunden, und dann wird der Haltemechanismus mit der daran angesaugten Glasplatte weiter befördert.
Aus dem Stand der Technik ist aus der DE 197 12 368 A1 ein Verfahren zum Versetzen von Gegenständen von einer ersten Stelle zu einer zweiten Stelle unter Verwendung eines den Gegenstand während des Versetzens an sich bindenden Haltemechanismus bekannt, bei dem die Aufgabe gelöst werden soll, dieses Verfahren derart weiterzubilden, dass auf einfache Weise ein unter allen Umständen sicheres Versetzen von Gegenständen durchgeführt werden kann. Als zu versetzende Gegenstände werden dabei Glasscheiben genannt.
Die Lösung dieser Aufgabe wird, gemäß den Angaben im Kennzeichen des Anspruchs 1, dadurch gelöst, dass das Heranfahren des Hubmechanismus an den zu versetzenden Gegenstand an die erste oder die zweite Stelle unter Berücksichtigung der tatsächlichen Lage und / oder Ausrichtung derselben erfolgt, wobei der Haltemechanismus bei Bedarf unter Ausnutzung einer freien Drehbarkeit und / oder Schwenkbarkeit desselben um eine oder mehrere Achsen ausgerichtet wird.
Im weiter beanspruchten Vorrichtungsanspruch 7 wird näher erläutert, dass der zu versetzende Gegenstand eine Glasscheibe ist, dass die erste Stelle ein InnenladerGestell ist, und dass die zweite Stelle ein Förderband und der Haltemechanismus ein Saugrahmen sind.

In der der DE 101 48 038 A1 ist eine Einrichtung zur Plattenübergabe von einem Plattenförderer auf ein Stapelgestell oder dergleichen beschrieben, mit einem Roboter mit einem Roboterarm der an seinem freien Ende einen Saugrahmen oder dergleichen zum Aufnehmen einer Platte vom Plattenförderer trägt, und der mit einer für seine Bewegungsfunktion ausreichenden Anzahl von Freiheitsgraden ausgestattet ist.
Der Weiterbildung einer solchen Einrichtung liegt die Aufgabe zugrunde, eine Einrichtung zur Plattenübergabe von einem Plattenförderer auf ein Stapelgestell so auszubilden, dass, im Falle einer Glasplatte, möglichst keine Beeinträchtigung der Luftseite des Glases erfolgt.

Gelöst wird diese Aufgabe dadurch, dass der Plattenförderer mit einer Aussparung, in welche der Roboterarm eintauchen kann, und mit, ein Eintauchen auch des Saugrahmens oder dergleichen ermöglichenden, Aussparungen versehen ist. Ferner soll der Saugrahmen oder dergleichen am freien Ende des Roboterarms in eine nach oben weisende Position schwenkbar angeordnet sein, um aus der in die Aussparungen des Plattenförderers eintauchenden Position eine Platte an ihrer dem Plattenförderer zugewandten Seite zu ergreifen.

Das hier verwendete Stapelgestell ist unbeweglich am Boden befestigt, es kann somit nur von der, dem Roboterarm zugewandten, Seite bestückt werden. Außerdem muss das Stapelgestell jeweils beim Beladen mit einer weiteren Glasplatte um die geringe Distanz der Dicke einer Glasplatte vom Roboterarm weggerückt werden, da der Abstand des Roboterarms eine feste Größe darstellt. Hierzu sind in der Praxis beim derzeitigen Stand der Technik so genannte Taktschlitten notwendig, die das Stapelgestell jeweils vor dem Beladen mit einer neuen Glasplatte um die Distanz einer Glasplatten - Dicke vom Roboterarm wegrücken, um den Platz für eine weitere Glasplatte frei zu machen. Ferner ist zum Beladen des Stapelgestells von der anderen Seite eine Drehscheibe notwendig. Für das Beladen des Stapelgestells mit großen und schweren Glasplatten sind der benötigte Taktschlitten und die erforderliche Drehscheibe der auftretenden Belastung gemäß aufwendig konstruiert und in der Herstellung sehr teuer.

Aus der Druckschrift DE 10 2008 045370 B4 sind weiterhin eine Vorrichtung und ein Verfahren für das bündige Umsetzen großflächiger Platten unterschiedlicher Bauart auf ein Transportfahrzeug bekannt, wobei mindestens ein Förderer zur Anlieferung von Platten mindestens einer Bauart vorgesehen ist, und der Förderer Aussparungen für einen Zugriff auf die Platten auch von der Unterseite her hat. Ferner sind mindestens eine Schwenkstapel-Vorrichtung mit einem Greifer-Rahmen, einer Dreh- und Schwenkeinrichtung und mit an dem Greifer-Rahmen befestigten Haftelementen, sowie mindestens ein Stapelgestell auf einer fahrbaren Lafette vorgesehen.

Der Erfindung liegt die Aufgabe zugrunde, eine Vorrichtung und ein Verfahren für das bündige Umsetzen großflächiger Platten unterschiedlicher Bauart auf ein Transportfahrzeug zu schaffen, welche preiswert und zuverlässig sind.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 7 gelöst. Hinsichtlich des Computerprogramms wird diese Aufgabe durch Patentanspruch 10 und hinsichtlich des maschinenlesbaren Trägers durch Patentanspruch 11 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1 : eine Seitenansicht der erfindungsgemäßen Vorrichtung
Fig. 2: eine Draufsicht der erfindungsgemäßen Vorrichtung
Fig.3: eine Draufsicht einer erweiterten Ausbauform der erfindungsgemäßen Vorrichtung

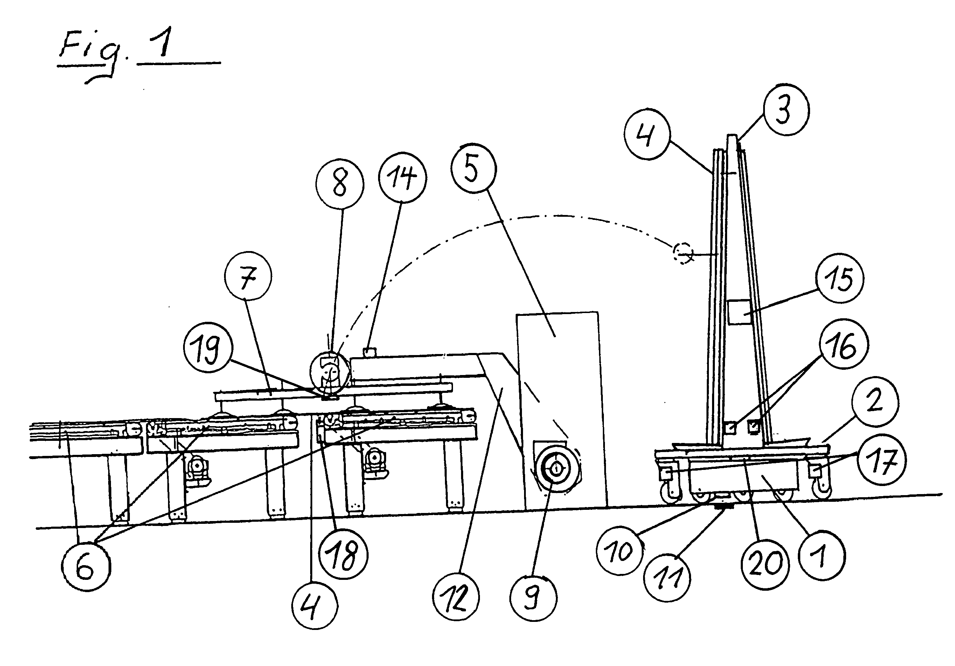

In der Fig.1 ist eine Seitenansicht der erfindungsgemäßen Vorrichtung gezeigt. Auf der linken Seite sind drei Abschnitte eines Förderers, hier speziell eines Rollenförderers 6, dargestellt, auf die in der Laufrichtung eine Schwenkstapel - Vorrichtung 5 folgt. Diese Vorrichtung 5 weist einen Schwenkarm 12 mit einem Direktantrieb 9 auf, der einen mittels einer Dreh - und Schwenkeinrichtung 8 betätigten Greifer - Rahmen 7 trägt. Der Greifer - Rahmen 7 ist mittels der, nicht näher bezeichneten, in der Seitenansicht vier Saugelemente mit der Platte 4 verbunden. Die Erfassung der Platte 4 mittels des Greifer - Rahmens 7 erfolgt in dieser Darstellung von oben. Die dargestellte Aussparung im Bereich des Förderers 6 lässt auch eine Erfassung einer Platte 4 von unten zu. Anstelle der Vorrichtung 5 ist für das Abstapeln der Platten 4 auch die Verwendung eines Greif - Roboters oder eines artverwandten Gerätes möglich.

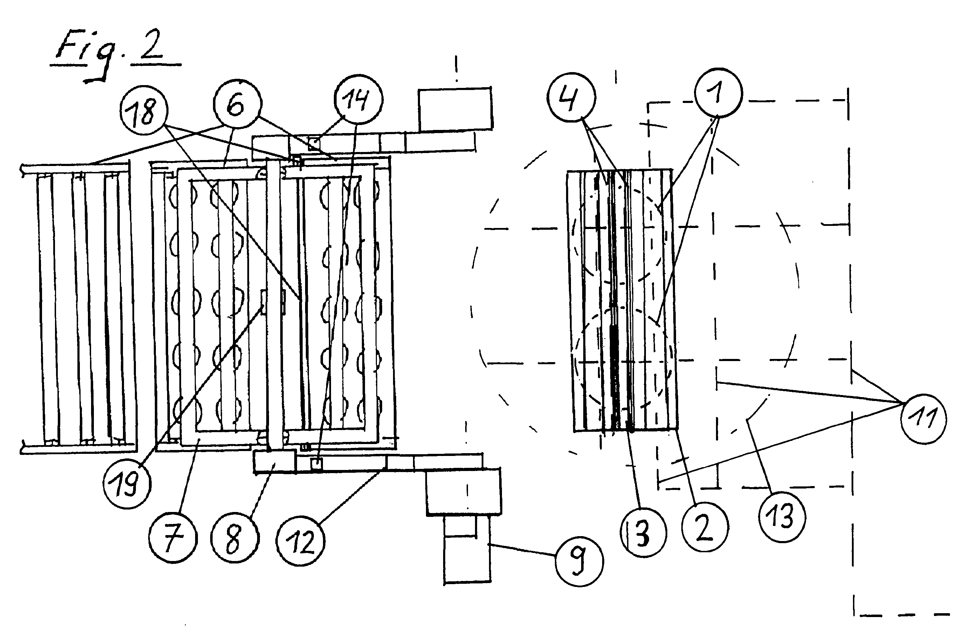

Am Ende des Schwenkarms 12 befindet sich ein Sensor 14 zur Sicherstellung der Parallel - Lage der Platten 4. Diese Einrichtung ist in der Fig.2 näher beschrieben. Die weiter in diesem Bereich angeordnete Platten - Kamera 19 erfasst die Abmessungen der einlaufenden Platten 4 und kann dem Steuerzentrum der vorliegenden Anlage zusätzlich eventuell benötigte Hinweise auf deren Qualitätsmerkmale geben.

Die zudem hier angeordnete Platten - Korrektureinrichtung 18 dient dem Zweck, Platten 4, die auf dem Förderer 6 nicht parallel zur Laufrichtung ausgerichtet sind, vor der Erfassung durch die Schwenkstapel - Vorrichtung 5 gerade auszurichten. Dies kann im einfachsten Fall dadurch geschehen, dass die Laufrollen des letzten Teils des Rollenförderers 6 abgeschaltet werden, und die betreffende, auszurichtende, Platte 4 an diesen Rollen abgebremst wird und mittels der nachschiebenden Rollen des Förderers 6 automatisch ausgerichtet wird. Im anderen Fall bewirkt die Platten - Korrekturvorrichtung 18 durch das kurzfristige hubgesteuerte Anheben einer, parallel zu den Laufrollen ausgerichteten, Ausrichtleiste in Verbindung mit den nachschiebenden Rollen des Rollenförderers 6 diese Lagenkorrektur. Diese letztere Methode kann besonders bei unempfindlichen Platten 4 angewendet werden.

Das auf der rechten Seite in der Seitenansicht dargestellte Transportfahrzeug 1 ist mittels einer Kupplung 20 mit der Lafette 2 eines Stapelgestells 3 verbunden. Diese Kupplung 20 ist funktechnisch einschaltbar nachdem ein Transportfahrzeug 1 unter eine Lafette 2 gefahren ist. Die Kupplung 20 befindet sich zwischen jeder Lafette 2, bzw. dem zugehörigen Stapelgestell 3, und dem jeweils zugehörigen Transportfahrzeug 1. Die Kupplung 20 kann jeweils nicht nur funktechnisch eingeschaltet und gelöst werden, sondern auch auf induktivem Weg mittels der jeweils entsprechenden Steuerleitung 11. Die Abstimmung dieser Steuerung ist eine Frage der Auslegung des jeweiligen Steuersystems und des entsprechenden Programms.

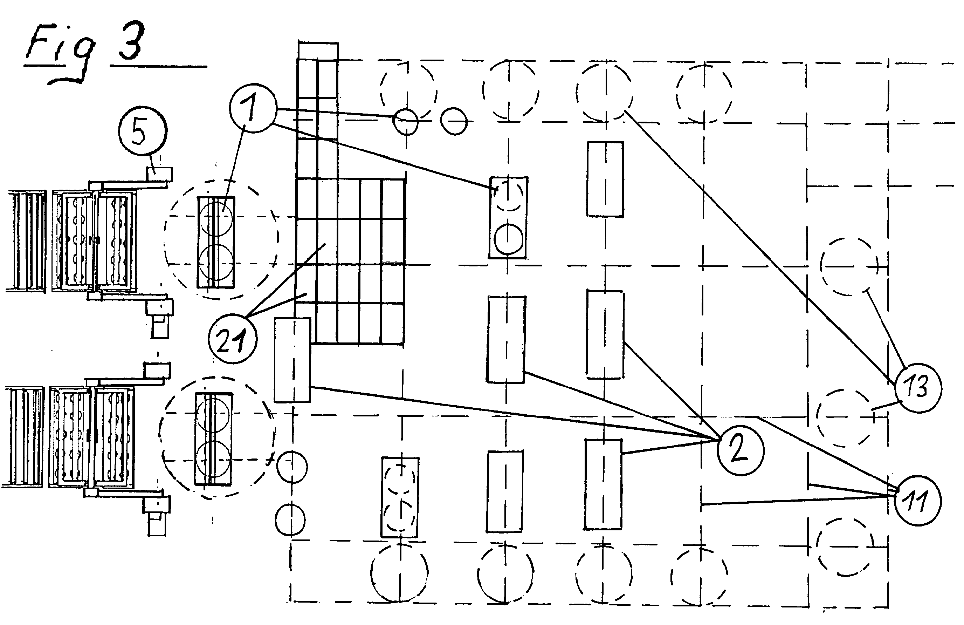

Die Zufuhr der Energie für den Antrieb eines Transportfahrzeugs 1 erfolgt induktiv mittels einer Leitung 11. Die entsprechende Energieübertragungs - Einrichtung 10 befindet sich möglichst bodennahe an der Unterseite des jeweiligen Transportfahrzeugs 1. Diese Leitungen 11 sind entsprechend den gewünschten Bewegungslinien der Transportfahrzeuge 1 in der jeweiligen Anlage im Boden verlegt.
Das Layout der Struktur dieser Bewegungslinien, also das detaillierte Sichtbarmachen eines gezeichneten Abbilds der zu fahrenden Verkehrswege, und damit einer späteren tatsächlichen Kabelverlegung, beinhaltet notwendige redundante Fahrwege und Parkplätze, sowie entsprechende Weichen. Näheres hierzu wird in der Fig.3 erläutert.
Im Verbund mit den Leitungen zur induktiven Stromzuführung erfolgt die Verlegung der benötigten Steuerleitungen für den Betrieb der Gesamtanlage.
Normalerweise erfolgt die Verlegung der Leitungen 10 während des Aufbaus des Fußbodens der Gesamtanlage und die so realisierte Struktur ist später nur noch schwer zu ändern.

In einer besonderen Ausführungsform wird deshalb vorgeschlagen, im gesamten Bereich der zu erstellenden Anlage, oder in Teilbereichen, anstelle fest verlegter Induktionskabel großflächige Platten mit vorgegebenen Teilstrukturen energiezuführender Induktionskabel und Steuerleitungen zu verlegen. Hierbei müssen diese vorgefertigten Platten über genormte Anschluss - Elemente verfügen, die ein flexibles Zusammensetzen und ein reibungsloses Einbinden dieser Platten untereinander, und in eine evtl. schon bestehende Struktur, ermöglichen (vgl. hierzu auch Fig. 3)

Auf dem Stapelgestell 3 sind auf der linken Seite drei Platten 4, und auf der rechten Seite eine Platte 4, dargestellt. Im unteren Bereich des Stapelgestells sind auf jeder Seite Sensoren 16 zur Detektion der Plattenanzahl installiert. In der Mitte des Stapelgestells 3 befindet sich eine Display - Darstellung 15 mit der Anzeige der relevanten Parameter der Belegung des jeweiligen Stapelgestells. Dies dient zur Information des Personals der jeweiligen Anlage. Die hier sichtbare Information steht natürlich auch der Steuerung der Gesamtanlage zur Verfügung.

Die an der Lafette 2 des Stapelgestells 3 vorgesehene Bremseinrichtung 17 dient dem Zweck, das Stapelgestell 3 während des Beladens fest am Boden zu verankern, damit das Stapelgestell 3 während des Aufsetzens, insbesondere von schweren, Platten 4 sich nicht verschieben kann, und die einzelnen Platten 4 bündig aufgesetzt werden können. Die Bremseinrichtung 17 wird automatisch von der zentralen Steuereinrichtung der jeweiligen Anlage betätigt, und / oder in Abhängigkeit von der Stellung der Schwenkstapel - Vorrichtung 5 geschaltet.
Zum Transport großer und / oder schwerer Platten können auch mehr als zwei Transportfahrzeuge 1 eingesetzt werden.

Die Fig. 2: zeigt eine Draufsicht der erfindungsgemäßen Vorrichtung. Hier ist der Schwenkarm 12 mit seinem Direktantrieb 9 über den drei Elementen des Förderers 6 aus der Fig. 1 zu sehen. Die mit dem Schwenkarm 12 verbundene Dreh - und Schwenkeinrichtung 8 trägt den Greifer - Rahmen 7 mit zwanzig skizzierten Greifelementen.
Auf den beiden Seiten des Schwenkarms 12 ist jeweils ein Sensor 14 zur Kontrolle der Parallel - Lage der von der Schwenkstapel - Vorrichtung 5 erfassten Platten 4 in Relation zu der Anlegefläche des Stapelgestells 3 vorgesehen. Diese messen im einfachsten Fall den Abstand der Dreh -und Schwenkeinrichtung 8 zu der vorher abgestellten Platte 4. Eventuelle Unstimmigkeiten in der Parallel - Lage zweier hintereinander abzustellender Platten 4 können auf diese Weise rechtzeitig erkannt, und mittels einer Drehung des Stapelgestells 3 über die betreffenden Transportfahrzeuge 1 korrigiert werden. Eine solche Korrektur erfolgt im einfachsten Fall durch eine leichte Bewegung eines Transportfahrzeugs 1, das diese Bewegung in eine Drehung der Lafette 2 und damit des Stapelgestells 3 umsetzt. Die Möglichkeit einer vollständigen Drehung durch die gleichzeitige Bewegung beider gezeigter Transportfahrzeuge 1 ist durch den Drehplatz 13 gekennzeichnet. Die prinzipielle Struktur der Induktions - und Steuerleitungen 11 für den Betrieb der Transportfahrzeuge 1 ist durch die Linienführung 11 angedeutet. Diese Struktur richtet sich im jeweiligen Fall nach den Gegebenheiten in der betreffenden Werkhalle.

Die Fig_3: zeigt eine Draufsicht einer erweiterten Ausbauform der erfindungsgemäßen Vorrichtung. Hier ist zu erkennen, dass anstelle lediglich einer Schwenkstapel - Vorrichtung 5 beispielhaft deren zwei vorgesehen sind. Diese beiden Vorrichtungen 5 können hierbei entweder Platten 4 aus demselben Baustoff und /oder beispielsweise unterschiedlicher Dicke oder Platten 4 aus unterschiedlichen Baustoffen auf entsprechende Stapelgestelle 1 verladen. Eine solche Variante wäre beispielsweise bei dem Bau eines Fertighauses denkbar.
Für den gezeigten Fall ist eine Vielzahl von Induktions - und Steuerleitungen 11 notwendig, deren Struktur hier rein beispielhaft dargestellt ist. Es ergibt sich hierbei jedoch auch eine große Variationsbreite von automatisch verfahrbaren Lafetten 2 und Drehplätzen 13. Als Beispiel für die Installation von Induktions - Verlegeplatten, wie sie bei der Beschreibung der Fig. 1 angeführt sind, ist hier beispielhaft eine entsprechende Teilstruktur entsprechender Platten 21 eingezeichnet. Die Größe und die Abmessungen solcher Induktions - Verlegeplatten 21 richtet sich hierbei nach der Anzahl der benötigten Leitungen 11, der Anzahl der Weichen und der benötigten Leitungsdichte der induktiv versorgten Flächen.
Die komplexe Steuerung der beschriebenen Bewegungsabläufe erfordert ein spezielles Steuerprogramm.

### Bezugszeichenliste

- 1: Transportfahrzeug
- 2: Lafette eines Stapelgestells
- 3: Stapelgestell
- 4: Platte
- 5: Schwenkstapel - Vorrichtung
- 6: Förderer, Rollenförderer
- 7: Greifer - Rahmen
- 8: Dreh - und Schwenkeinrichtung für den Greifer - Rahmen
- 9: Direktantrieb des Schwenkarms 12
- 10: Energieübertragungs - Einrichtung für ein Transportfahrzeug 1
- 11: Induktions - und Steuerleitung
- 12: Schwenkarm
- 13: Drehplatz
- 14: Sensor für Parallel - Lage
- 15: Displaydarstellung für Platten - Parameter
- 16: Sensoren zur Detektion der Plattenanzahl
- 17: Bremseinrichtung
- 18: Platten - Korrektureinrichtung
- 19: Platten - Kamera
- 20: Kupplung für ein Transportfahrzeug
- 21: Induktions - Verlegeplatten

## Patentansprüche

1. Vorrichtung für das bündige Umsetzen großflächiger Platten unterschiedlicher Bauart auf ein Transportfahrzeug mit
a) mindestens einem Förderer (6) zur Anlieferung von Platten (4) mindestens einer Bauart, wobei der Förderer (6) Aussparungen für einen Zugriff auf die Platten (4) auch von der Unterseite her hat,
b) mindestens einer Schwenkstapel-Vorrichtung (5) mit einem Greifer-Rahmen (7), einer Dreh- und Schwenkeinrichtung (8) und mit an dem Greifer-Rahmen (7) befestigten Haftelementen,
c) mit mindestens einem Stapelgestell (3) auf einer fahrbaren Lafette (2),
**dadurch gekennzeichnet, dass**
d) die Lafette (2) mit mindestens zwei Transportfahrzeugen (1) mittels jeweils einer zuschaltbaren Kupplung (20) mechanisch verbunden ist und wobei die Transportfahrzeuge (1) mittels einer Vielzahl von, mittels im Bodenbereich installierten Leitungen (11) mit Energie versorgt und elektronisch bzw. elektrisch gesteuert werden, und
e) dass der Abstand des Stapelgestells (3) zu der Schwenkstapel-Vorrichtung (5) ermittelt wird, dass das Stapelgestell (3) mittels beider Transportfahrzeuge (1) justiert wird, und dass die Lafette (2) mittels einer elektrisch gesteuerten Feststellbremse an jedem Transportfahrzeug (1) mechanisch arretiert wird.

2. Vorrichtung nach Anspruch 1, **dadurch gekennzeichnet, dass** eine Schwenkstapel-Vorrichtung (5) auf beiden Schwenkarmen (12) jeweils einen Sensor (14) zur Messung des Abstandes zum Stapelgestell (3) aufweist.

3. Vorrichtung nach Anspruch 1 oder 2, **dadurch gekennzeichnet, dass** eine am Greifer-Rahmen (7) installierte Kamera (19) die Abmessungen und die relevanten Qualitätsmerkmale der einlaufenden Platten (4) erfasst.

4. Vorrichtung nach einem der vorhergehenden Ansprüche, **dadurch gekennzeichnet, dass** eine Platten-Korrektureinrichtung (18) dazu dient die Ausrichtung auf dem Förderer (6) zu korrigieren.

5. Vorrichtung nach einem der vorhergehenden Ansprüche, **dadurch gekennzeichnet, dass** ein Stapelgestell (3) auf beiden Stapelseiten Sensoren (16) zur Ermittlung der Anzahl der auf jeder Seite aufliegenden Platten (4) aufweist.

6. Vorrichtung nach einem der vorhergehenden Ansprüche, **dadurch gekennzeichnet, dass** ein Stapelgestell (3) eine Displaydarstellung (15) mit der Anzeige der relevanten Parameter der jeweiligen Belegung aufweist.

7. Verfahren für das bündige Umsetzen großflächiger Platten unterschiedlicher Bauart auf ein Transportfahrzeug mit den folgenden Verfahrensschritten
a) es wird jede Bauart der verwendeten Platten (4) auf mindestens einem Förderer (6) in den Bereich mindestens einer jeweiligen Schwenkstapel-Vorrichtung (5) transportiert,
b) jede Platte (4) wird dann auf der SchwenkstapelVorrichtung (5) mittels Haftelementen, die an einem Greifer-Rahmen (7) befestigt sind, von einem Rollenförderer (8) mittels eines Schwenkarms (12) und einer Dreh-Schwenkeinrichtung (8) für den Greifer-Rahmen (7) abgehoben und in den Bereich mindestens eines Stapelgestells (3) auf eine Lafette (2) verschwenkt,
c) anschließend wird die jeweilige Platte (4) mittels des Schwenkarms (12) auf dem betreffenden Stapelgestell (3) abgesetzt,
d) das betreffende Stapelgestell (3) wird nach der gewünschten Beladung auf der betreffenden Seite entweder gedreht und erneut auf der anderen Seite beladen oder zu einem weiteren Zielort verfahren, **dadurch gekennzeichnet, dass**
e) die Lafette (2) mit mindestens zwei Transportfahrzeugen (1) mittels jeweils einer zuschaltbaren Kupplung (20) mechanisch verbunden ist, und die Transportfahrzeuge (1) auf induktivem Weg mittels Induktions- und Steuerleitungen (11) angetrieben und gesteuert werden, und
f) während des Schwenkvorgangs der Abstand des Stapelgestells (3) zu der Schwenkstapel-Vorrichtung (5) ermittelt, das Stapelgestell (3) mittels beider Transportfahrzeuge (1) justiert, und die Lafette (2) mechanisch arretiert wird.

8. Verfahren nach Anspruch 7, **dadurch gekennzeichnet, dass** mittels einer Kamera (19) die Anmessungen und die relevanten Qualitätsmerkmale der einlaufenden Platten gemessen werden.

9. Verfahren nach einem der Ansprüche 7 oder 8, **dadurch gekennzeichnet, dass** die Struktur der Induktions- und Steuerleitungen (11) mittels, diese Struktur repräsentierender, Induktions- und Verlegeplatten (21) hergestellt wird.

10. Computerprogramm mit einem Programmcode zur Durchführung der Verfahrensschritte nach einem der Ansprüche 7 bis 9, wenn das Programm in einem Computer ausgeführt wird.

11. Maschinenlesbarer Träger mit dem Programmcode des Computerprogramms nach Anspruch 10.

## Claims

1. Apparatus for the flush transfer of large-surface-area panels of different types of construction to a transporting vehicle, said apparatus having
a) at least one conveyor (6) for delivering panels (4) of at least one type of construction, wherein the conveyor (6) has recesses for access to the panels (4) even from the underside,
b) at least one pivot-stack apparatus (5) with a gripper frame (7), a rotating and pivoting apparatus (8) and with gripping elements which are fastened on the gripper frame (7),
c) having at least one stacking rack (3) on a drivable carriage (2), **characterized in that**
d) the carriage (2) is mechanically connected to at least two transporting vehicles (1) by means of in each case one connectable coupling (20), and wherein the transporting vehicles (1) are supplied with power by means of a plurality of lines (11) which are installed in the floor region and is controlled electronically or electrically, and
e) **in that** the distance between the stacking rack (3) and the pivot-stack apparatus (5) is determined, **in that** the stacking rack (3) is adjusted by means of both transporting vehicles (1), and **in that** the carriage (2) is mechanically locked by means of an electrically controlled parking brake on each transporting vehicle (1).

2. Apparatus according to Claim 1, **characterized in that** a pivot-stack apparatus (5) comprises a sensor (14) on each of the two pivot arms (12) for measuring the distance to the stacking rack (3).

3. Apparatus according to Claim 1 or 2, **characterized in that** a camera (19) which is installed on the gripper frame (7) records the dimensions and the relevant quality features of the incoming panels (4).

4. Apparatus according to one of the preceding claims, **characterized in that** a panel correcting device (18) serves for the purpose of correcting the alignment on the conveyor (6).

5. Apparatus according to one of the preceding claims, **characterized in that** a stacking rack (3) comprises sensors (16) on both stack sides for determining the number of panels (4) located on each side.

6. Apparatus according to one of the preceding claims, **characterized in that** a stacking rack (3) comprises a display (15) with indication of the relevant parameters of the respective configuration.

7. Method for the flush transfer of large-surface-area panels of different types of construction to a transporting vehicle, said method having the following method steps
a) every type of construction of panels (4) used is transported on at least one conveyor (6) into the region of at least one respective pivot-stack apparatus (5),
b) each panel (4) is then lifted on the pivot-stack apparatus (5) by means of gripping elements, which are fastened on a gripper frame (7), from a roller conveyor (8) by means of a pivot arm (12) and a rotating-pivoting device (8) for the gripper frame (7) and pivoted into the region of at least one stacking rack (3) on a carriage (2),
c) the respective panel (4) is then deposited on the relevant stacking rack (3) by means of the pivot arm (12),
d) the relevant stacking rack (3), according to the desired loading on the relevant side, is then either rotated and loaded again on the other side or moved to a further destination, **characterized in that**
e) the carriage (2) is mechanically connected to at least two transporting vehicles (1) by means of in each case one connectable coupling (20), and the transporting vehicles (1) are driven and controlled in an inductive manner by means of induction and control lines (11), and
f) during the pivoting process the distance between the stacking rack (3) and the pivot-stack apparatus (5) is determined, the stacking rack (3) is adjusted by means of both transporting vehicles (1) and the carriage (2) is mechanically locked.

8. Method according to Claim 7, **characterized in that** the dimensions and the relevant quantity features of the incoming panels are measured by means of a camera (19).

9. Method according to either of Claims 7 and 8, **characterized in that** the structure of the induction and control lines (11) is produced by means of induction and installation panels (21).

10. Computer program having a program code for carrying out the method steps according to one of Claims 7 to 9 when the program is carried out on a computer.

11. Machine-readable carrier with the program code of the computer program according to Claim 10.

## Revendications

1. Dispositif pour le transfert à plat de plaques de grande surface de différents types de construction sur un véhicule de transport comprenant
a) au moins un convoyeur (6) pour livrer des plaques (4) d'au moins un type de construction, dans lequel le convoyeur (6) présente des évidements pour un accès aux plaques (4) également par le dessous,
b) au moins un dispositif d'empilement à bascule (5) comprenant un cadre de grappin (7), un dispositif à bascule rotatif (8) et des éléments de retenue fixés sur le cadre de grappin (7),
c) comprenant au moins un bâti d'empilement (3) sur un affût mobile (2), **caractérisé en ce que**
d) l'affût (2) est relié mécaniquement à au moins deux véhicules de transport (1) au moyen d'un couplage connectable (20), et dans lequel les véhicules de transport (1) sont alimentés en énergie et commandés électroniquement, respectivement électriquement, au moyen d'une pluralité de lignes (11) montées dans la zone de fond, et
e) **en ce que** la distance du bâti d'empilement (3) au dispositif d'empilement à bascule (5) est calculée, **en ce que** le bâti d'empilement (3) est ajusté au moyen des deux véhicules de transport (1), et **en ce que** l'affût (2) est bloqué mécaniquement sur chaque véhicule de transport (1) au moyen d'un frein de stationnement à commande électrique.

2. Dispositif selon la revendication 1, **caractérisé en ce qu'**un dispositif d'empilement à bascule (5) présente sur ses deux bras à bascule (12), un capteur (14) respectif pour mesurer la distance jusqu'au bâti d'empilement (3).

3. Dispositif selon la revendication 1 ou 2, **caractérisé en ce qu'**une caméra (19) montée sur le cadre de grappin (7) mesure les dimensions et les caractéristiques de qualité pertinentes des plaques (4) entrantes.

4. Dispositif selon l'une des revendications précédentes, **caractérisé en ce qu'**un dispositif de correction de plaque (18) est utilisé pour corriger l'alignement sur le convoyeur (6).

5. Dispositif selon l'une des revendications précédentes, **caractérisé en ce qu'**un bâti d'empilement (3) présente des capteurs (16) de chaque côté de la pile pour calculer le nombre de plaques (4) reposant sur chaque côté.

6. Dispositif selon l'une des revendications précédentes, **caractérisé en ce qu'**un bâti d'empilement (3) présente un affichage d'écran (15) affichant les paramètres correspondants de chaque remplissage.

7. Procédé pour le transfert à plat de plaques de grande surface de différents types de construction sur un véhicule de transport, comprenant les étapes de procédé suivantes
a) chaque type de construction des plaques (4) employées est transporté sur au moins un convoyeur (6) dans la région d'au moins un dispositif d'empilement à bascule (5) respectif,
b) chaque plaque (4) est alors soulevée sur le dispositif d'empilement à bascule (5), au moyen d'éléments de retenue qui sont fixés sur un cadre de grappin (7), par un convoyeur à rouleaux (8) au moyen d'un bras à bascule (12) et d'un dispositif à bascule rotatif (8) pour le cadre de grappin (7), et basculée sur un affût (2) dans la région d'au moins un bâti d'empilement (3),
c) ensuite, la plaque (4) correspondante est abaissée sur le bâti d'empilement (3) en question au moyen du bras à bascule (12),
d) le bâti d'empilement (3) en question, est, selon le chargement souhaité sur le côté en question, soit tourné et chargé de nouveau sur l'autre côté, soit déplacé vers un autre lieu de destination, **caractérisé en ce que**
e) l'affût (2) est relié mécaniquement à au moins deux véhicules de transport (1) au moyen d'un couplage connectable (20), et les véhicules de transport (1) sont entraînés et commandés sur un trajet inductif au moyen de lignes à induction et de commande (11), et
f) pendant la bascule, la distance du bâti d'empilement (3) au dispositif d'empilement à bascule (5) est calculée, le bâti d'empilement (3) est ajusté au moyen des deux véhicules de transport (1) et l'affût (2) est bloqué mécaniquement.

8. Procédé selon la revendication 7, **caractérisé en ce que** les dimensions et les caractéristiques de qualité pertinentes des plaques entrantes sont mesurées au moyen d'une caméra (19).

9. Procédé selon l'une des revendications 7 ou 8, **caractérisé en ce que** la structure des lignes à induction et de commande (11) est fabriquée au moyen de plaques d'induction et de pose (21) représentant cette structure.

10. Programme informatique comprenant un code de programme pour exécuter les étapes de procédé selon l'une des revendications 7 à 9, lorsque le programme est exécuté dans un ordinateur.

11. Support lisible sur machine comprenant le code de programme du programme informatique selon la revendication 10.
